# EUROPÄISCHE PATENTANMELDUNG

(11) **EP 1 150 479 A2**
(43) Veröffentlichungstag der Anmeldung: **31.10.2001**
(21) Anmeldenummer: 01110432.0
(22) Anmeldetag: 27.04.2001
(51) Int. Cl.: H04M 3/493, H04Q 7/22

(54) **Verfahren zur interaktive Informationsabfrage mittels eines Mobiltelefons**

(30) Priorität: 28.04.2000 DE 10020831
(71) Anmelder: Blank, Anton, Dipl.-Ing., 70182 Stuttgart (DE)
(72) Erfinder: Blank, Anton, Dipl.-Ing., 70182 Stuttgart (DE)
(74) Vertreter: Liesegang, Eva

(57) **Zusammenfassung**

Verfahren zum Austauschen von Sprachinformationen und Daten zwischen einem mobilen Endgerät (1) und einer Mobilfunk-Serviceeinrichtung (2), wobei die Sprachinformationen mit Hilfe einer Spracheingabeinrichtung (6) des mobilen Endgeräts (1) erfaßt werden, wobei die Sprachinformationen über einen Sprachkanal eines Mobilfunknetzes (3) von dem mobilen Endgerät (1) an die Mobilfunk-Serviceeinrichtung (2) und die Daten über einen Datenkanal des Mobilfunknetzes (3) von der Mobilfunk-Serviceeinrichtung (2) an das mobile Endgerät (1) übertragen werden, und wobei die Daten in Abhängigkeit von einer Analyse der Sprachinformationen erzeugt werden. Die Daten werden mit Hilfe von Anzeigemitteln (5) des mobilen Endgeräts (1) zumindest teilweise ausgegeben, während der zum Übertragen der Sprachinformationen genutzte Sprachkanal ausgebildet ist.

## Beschreibung

Die Erfindung betrifft ein Verfahren zum Austauschen von Sprachinformationen und Daten zwischen einem mobilen Endgerät und einer Mobilfunk-Serviceeinrichtung, wobei die Sprachinformationen mit Hilfe einer Spracheingabeeinrichtung des mobilen Endgeräts erfaßt werden, wobei die Sprachinformationen über einen Sprachkanal eines Mobilfunknetzes von dem mobilen Endgerät über die Mobilfunk-Serviceeinrichtung und die Daten über einen Datenkanal des Mobilfunknetzes von der Mobilfunk-Serviceeinrichtung an das mobile Endgerät übertragen werden, und wobei die Daten in Abhängigkeit von einer Analyse der Sprachinformationen erzeugt werden.

Ein solches Verfahren wird beispielsweise in Verbindung mit einem Mobilfunktelefon benutzt. Das Mobilfunktelefon wird zunehmend zur Abwicklung häufiger Transaktionen, wie das mobile Banking, der elektronische Handel von Waren, Buchungen im Freizeit-, Kultur- und Reisegewerbe oder Dienstleistungen in Call-Centern genutzt. Des weiteren wird der mobile Zugang auf Inhalte des Internets mittels funkgestützter Endgeräte immer häufiger genutzt.

Im allgemeinen weisen das Mobilfunktelefon oder andere mobile Endgeräte wegen ihrer geringen Abmessungen eine recht einfache Tastatur sowie weitere manuelle Eingabemittel zur Bedienung auf. Mit Hilfe der Tastatur und der Eingabemittel können beispielsweise Befehle aus einem Menü ausgewählt werden, daß auf einer Anzeigeeinrichtung des mobilen Endgeräts angezeigt wird. Hierbei können mit Hilfe der Tastatur bzw. der Eingabemittel nur einfache Menüs gesteuert werden, da die Tastatur bzw. die Eingabemittel wegen der geringen Abmessungen des mobilen Endgeräts aus ergonomischer Sicht nicht bedienerfreundlich sind. Darüber hinaus erlaubt die Menüsteuerung mit Hilfe der Tatstatur nur eine schrittweise Abarbeitung von Menüsteuereingaben, da beispielsweise ein Überspringen von Menüschritten zum Erreichen eines Untermenüs mittels einer Tastatureingabe nicht ausführbar ist.

Eine Verbesserung stellt in diesem Zusammenhang die Möglichkeit des Ausführens einer Menüsteuerung oder anderer Befehle mit Hilfe einer Spracheingabe durch den Benutzer des mobilen Endgeräts dar. Hierbei werden die Informationen der Spracheingabe des Benutzers mit Hilfe des mobilen Endgeräts erfaßt. Die erfaßten Sprachinformationen werden dann über einen Sprachkanal, der zur Übertragung der Sprachinformationen in einem Mobilfunknetz geöffnet bzw. aufgebaut wird, an eine Mobilfunk-Serviceeinrichtung übertragen, die eine Einspeisung von Daten und Informationen aus dem Mobilfunknetz in Festnetzsysteme, beispielsweise ISDN-Verbindungen ermöglicht. Danach werden die Sprachinformationen von der Mobilfunk-Serviceeinrichtung an Sprachverarbeitungsmittel übertragen, die eine ausreichende Prozessorkapazität zum Ausführen einer Spracherkennung hinsichtlich der Sprachinformationen aufweisen. Im Anschluß an die Spracherkennung werden mit Hilfe einer CTI-Einrichtung (CTI - "Computer Telephony Integration") Befehle bzw. Anforderungen initiiert, die zum Erzeugen von Daten führen, die eine Reaktion bzw. Antwort auf die Spracheingabe des Benutzer des mobilen Endgeräts darstellen. Nachdem in dem Mobilfunknetz der Sprachkanal, welcher zur Übermittlung der Sprachinformationen von dem mobilen Endgerät an die Mobilfunk-Serviceeinrichtung genutzt wurde, geschlossen ist, wird in dem Mobilfunknetz ein Datenkanal geöffnet, um die Daten von der Mobilfunk-Serviceeinrichtung an das mobile Endgerät zu übertragen, so daß der Benutzer des mobilen Endgeräts über die Antwort bzw. Reaktion auf seine Spracheingabe informiert werden kann.

Aufgabe der Erfindung ist es, ein Verfahren zum Austauschen von Sprachinformationen und Daten in einem Mobilfunknetz zu schaffen, das eine höhere Benutzerfreundlichkeit für den Nutzer eines zum Daten- und Informationsaustausch mittels des Mobilfunknetzes geeigneten mobilen Endgeräts ermöglicht und die Anwendungsoptionen des mobilen Endgeräts erweitert.

Diese Aufgabe wird bei einem Verfahren der eingangs genannten Art erfindungsgemäß dadurch gelöst, daß die Daten mit Hilfe von Anzeigemitteln des mobilen Endgeräts zumindest teilweise ausgegeben werden, während der zur Übertragung der Sprachinformation genutzte Sprachkanal ausgebildet ist.

Das neue Verfahren wird zweckmäßig mit Hilfe eines mobilen Endgeräts gemäß Anspruch 17 genutzt.

Die Erfindung umfaßt den wesentlichen Grundgedanken, mit Hilfe eines mobilen Endgeräts in einem Mobilfunknetz einen Sprachkanal zum Austausch von Sprachinformationen und einen Datenkanal zum Austausch von Daten, die eine Antwort bzw. Reaktion auf die Sprachinformationen umfassen, zumindest teilweise zeitgleich zu nutzen, wobei die Sprachinformationen auf einer Spracheingabe eines Benutzers des mobilen Endgeräts basieren. Hierbei werden die Daten mit Hilfe von Anzeigemitteln des mobilen Endgeräts zumindest teilweise ausgegeben, während der Sprachkanal, der zur Übermittlung der Sprachinformationen genutzt wurde, ausgebildet bzw. geöffnet ist.

Der wesentliche Vorteil, welcher mit der Erfindung gegenüber dem Stand der Technik erreicht wird, besteht darin, daß es für den Benutzer des mobilen Endgeräts möglich ist, die Reaktion bzw. Antwort auf eine Spracheingabe auf den Anzeigemitteln des mobilen Endgeräts angezeigt zu bekommen, während er Weitere Spracheingaben vornehmen kann, die dann über den Sprachkanal übertragen werden können. Hierdurch ist die Benutzerfreundlichkeit des mobilen Endgeräts verbessert. Darüber hinaus erweitert das vorgeschlagene Verfahren die Anwendungsmöglichkeiten von mobilen Endgeräten im Zusammenhang mit Mobilfünknetzen. Mit Hilfe des Verfahrens, ist es beispielsweise möglich, einen Auftrag im Zusammenhang mit einem Bankkonto mit Hilfe der Spracheingabe zu erteilen und eine Auftragsbestätigung auf den Anzeigemitteln des mobilen Endgeräts darzustellen, noch während der Übertragung der Sprachinformationen genutzte Sprachkanal geöffnet ist. Hierdurch ist für den Benutzer des mobilen Endgeräts eine Kommunikation auf der Basis der parallelen Nutzung der Spracheingabemittel und der Anzeigemittel des mobilen Endgeräts ermöglicht.

Die Vorteile des vorgeschlagenen Verfahrens zeigen sich insbesondere dann, wenn die über den Datenkanal an das mobile Endgerät übertragenen Daten eine Aufforderung zur Verifizierung der vorherigen Spracheingabe an den Benutzer des mobilen Endgeräts umfassen. In diesem Fall können während des Zeitraums, in dem der Sprachkanal geöffnet ist, die Aufforderung zur Verifizierung umfassenden Daten auf den Anzeigemitteln des mobilen Endgeräts dargestellt werden, so daß die Spracheingabe von dem Benutzer mit Hilfe einer weiteren Spracheingabe korrigiert und/oder bestätigt werden kann.

Eine zweckmäßige Weiterbildung der Erfindung sieht vor, daß die Daten nach dem Übermitteln an das mobile Endgerät mit Hilfe von Verabeitungsmitteln und eines von den Verarbeitungsmitteln umfaßten Betriebssystems verarbeitet werden, so daß die Daten zumindest teilweise mittels der Anzeigemittel des mobilen Endgeräts ausgegeben werden können, wodurch eine Aufbereitung, Umwandlung und/oder Anpassung der über den Datenkanal übermittelten Daten vor der Anzeige möglich ist.

Bei einer vorteilhaften Ausgestaltung der Erfindung ist vorgesehen, daß während des zumindest teilweisen Ausgebens der Daten mittels der Anzeigemittel des mobilen Endgeräts weitere Sprachinformationen über den Sprachkanal übertragen werden. Das Ausgeben der Daten parallel zum Übertragen weiterer Sprachinformationen vermindert den Zeitaufwand beim Ausführen einer Anwendung mit Hilfe des mobilen Endgeräts.

Eine bevorzugte Ausführungsform, mit welcher ein vorhandener Standard zum Austausch von kurzen Texten genutzt wird, sieht vor, daß die Daten zumindest teilweise als SMS-Daten (SMS - "Short Message Service") übertragen werden.

Um die Ausgabe der Daten mit Hilfe der Anzeigemittel des mobilen Endgeräts nach möglichst kurzer Zeit im Anschluß an die Übertragung der Sprachinformationen auszuführen, wird bevorzugt, daß die SMS-Daten mit hoher Priorität auf der Basis eines SS7-Protokolls (SS7 - "Signalling System Number 7) übertragen werden.

Um die Handhabung der SMS-Daten zu optimieren, kann bei einer vorteilhaften Ausgestaltung der Erfindung vorgesehen sein, daß das Übertragen der SMS-Daten mit Hilfe einer SMS-Serviceeinrichtung ausgeführt wird, die von der Mobilfunk-Serviceeinrichtung umfaßt ist. Um eine bevorzugte Übertragung der Daten in unmittelbarem Anschluß an die Sprachinformationenübertragung zu ermöglichen, sieht eine zweckmäßige Ausführungsform der Erfindung vor, daß die Daten zumindest teilweise als USSD-Daten (USSD - "Unstructered Supplementary Service Data") übertragen werden.

Eine im Bezug auf die Benutzerfreundlichkeit des mobilen Endgeräts bevorzugte Fortbildung der Erfindung sieht vor, daß die Daten Sprachdaten umfassen, die mit Hilfe akustischer Ausgabemittel des mobilen Endgeräts als Sprachsignale ausgeben werden.

Bei einer Weiterbildung der Erfindung kann vorgesehen sein, daß die Sprachinformationen von der Mobilfunk-Serviceeinrichtung an Sprachverarbeitungsmittel übertragen werden, wobei die Sprachverarbeitungsmittel eine Servereinrichtung und Spracherkennungsmittel umfassen, daß die Sprachinformationen mit Hilfe der Spracherkennungsmittel verarbeitet werden, und daß mit Hilfe der Servereinrichtung eine Befehlsfolge zum Erzeugen der Daten ausgelöst wird, wobei die Befehlsfolge von einem Ergebnis des Verarbeitens der Sprachinformationen mit Hilfe der Spracherkennungsmittel abhängt. Hierdurch können Daten erzeugt werden, die unmittelbar vom Ergebnis der Spracherkennung abhängen.

Eine hinsichtlich einer schnellen Datenübermittlung bevorzugte Ausführungsform der Erfindung sieht vor, daß die Sprachinformationen von der Mobilfunk-Serviceeinrichtung an die Sprachverarbeitungsmittel zumindest teilweise mit Hilfe einer ISDN-Verbindung übertragen werden.

Um die Vielfalt der über den Datenkanal übertragenen Daten zu erweitern, so daß sich weitere Anwendungsmöglichkeiten des Verfahrens ergeben, sieht eine zweckmäßig Weiterbildung der Erfindung vor, daß die Befehlsfolge einen Informationsaustausch zwischen der Servereinrichtung und einer Dienste-Servereinrichtung und/oder zwischen der Dienste-Servereinrichtung und externen Dienste-Servereinrichtungen umfaßt.

Zweckmäßig werden die Daten in diesem Fall zumindest teilweise in der Dienste-Servereinrichtung und/oder in den externen Dienste-Servereinrichtungen erzeugt.

Vorteilhafte Weiterbildungen der Erfindungen sehen vor, daß die SMS-Daten mit Hilfe einer SMS-Servereinrichtung erzeugt werden, die von der Dienste-Servereinrichtung umfaßt ist, und/oder die USSD-Daten mit Hilfe einer USSD-Servereinrichtung erzeugt werden, die von der Servereinrichtung umfaßt ist. Hierdurch ist es möglich, die verschiedenen Daten jeweils getrennt mittels eigener Servereinrichtungen zu erzeugen.

Eine hinsichtlich der Erweiterung der Anwendungsmöglichkeiten des Verfahrens bevorzugte Ausführungsform der Erfindung sieht vor, daß die Daten mit Hilfe der Anzeigemittel des mobilen Endgeräts derart ausgegeben werden, daß eine mit Hilfe der Spracheingabe initiierte Menüsteuerfunktion hinsichtlich eines Menüs ausgeführt wird, welches mittels der Anzeigemittel angezeigt wird.

Eine zweckmäßige Anwendung der Erfindung sieht vor, daß mit Hilfe des Austauschs der Sprachinformationen und der Daten eine Bankdienstleistung abgerufen wird.

Die Erfindung wird im folgenden anhand eines Ausführungsbeispiels unter Bezugnahme auf eine Zeichnung näher erläutert.

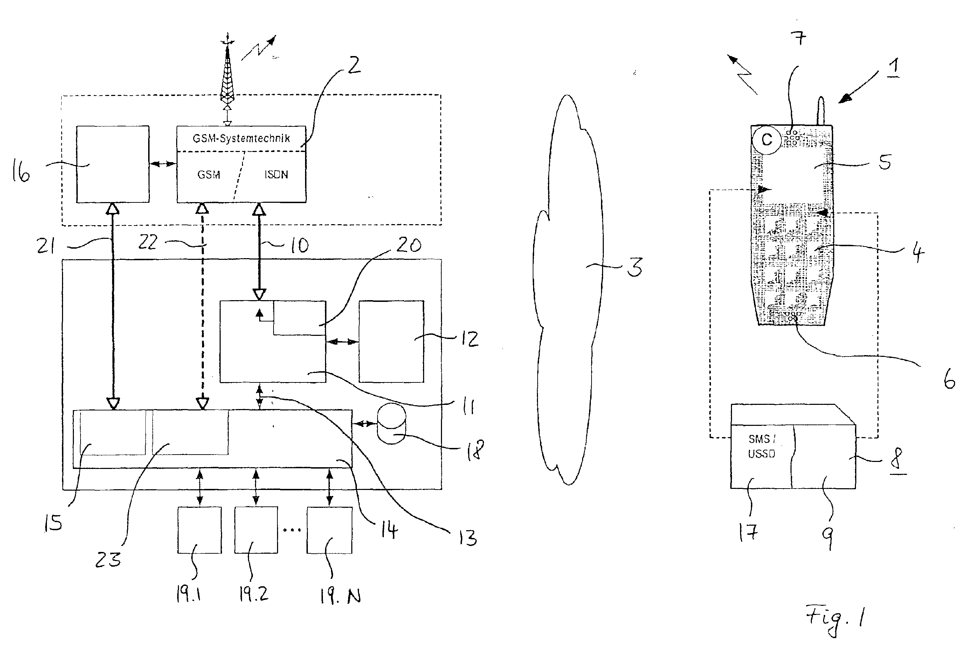

Figur 1 zeigt eine schematische Darstellung eines Systems, in welchem zwischen einem Mobilfunk-Endgerät 1 und einer Mobilfunk-Serviceeinrichtung 2 über ein Mobilfunk-Netzwerk 3 Informationen und Daten ausgetauscht werden können. Das Mobilfunk-Netzwerk basiert vorzugsweise auf dem GSM-Standard (GSM - "Groupe Spécial Mobile"). Das im folgenden beschriebene Verfahren ist jedoch nicht auf diesen Standard beschränkt und kann grundsätzlich unter Ausnutzung eines beliebigen Mobilfunk-Standards ausgeführt werden.

Das Mobilfunk-Endgerät 1 weist eine Tastatur 4 für manuelle Eingaben eines Benutzers, eine Anzeigeeinrichtung 5, akustische Eingabemittel 6 zum Erfassen von Spracheingaben des Benutzers und akustische Ausgabemittel 7 zum Ausgeben von Sprachsignalen auf. Ein auf einer Prozessorkarte 8 eingeprägtes Betriebssystem dient zum Erzeugen und Verarbeiten von Befehlen und Anforderungen zur Steuerung der Tastatur 4, der Anzeigemittel 5 und eventuell der akustischen Eingabemittel 6 und der akustischen Ausgabemittel 7. In Figur 1 ist die Prozessorkarte 8 zur Vereinfachung der Darstellung außerhalb des Mobilfunk-Endgeräts 1 gezeigt. Es ist jedoch selbstverständlich, daß die Prozessorkarte 8 in der Realität in das Mobilfunk-Endgerät 1 integriert ist, vorzugsweise als austauschbare Wechselkarte. Die Prozessorkarte 8 weist Prozessor- und Speichermittel (nicht dargestellt) zum Ausführen der Befehle und Anforderungen auf und ist vorzugsweise als eine SIM-Karte (SIM - "Subscriber Identity Module") ausgeführt.

Bei einer Nutzung des Mobilfunk-Endgeräts 1 wird zunächst unter Ausnutzung eines Wählprogramms 9, welches als Teil des auf der Prozessorkarte 8 eingeprägten Betriebssystems ausgebildet oder als unabhängiges, mit Hilfe des Betriebssystems steuerbares Anwendungsprogramm ausgeführt ist, eine Verbindung zu einem gewünschten Dienst aufgebaut. Die Steuerung einer anschließenden Kommunikation zwischen dem Benutzer des Mobilfünk-Endgeräts 1 und dem Dienst soll mit Hilfe einer Sprachsteuerung erfolgen. Zu diesem Zweck werden Spracheingaben des Benutzers mit Hilfe der akustischen Eingabemittel 6 erfaßt. Die erfaßte Spracheingabe des Benutzers wird in Form von Sprachinformationen über einen in dem Mobilfunk-Netzwerk 3 aufgebauten bzw. geöffneten Sprachkanal an die Mobilfunk-Serviceeinrichtung 2 übertragen. Die Mobilfunk-Serviceeinrichtung 2 hat u.a. die Aufgabe, eine Kopplung zwischen dem Mobilfunk-Netzwerk 3 und einem oder mehreren anderen Netzwerken, insbesondere Festnetzen herzustellen. Bei dem Festnetz kann es sich beispielsweise um ein Netzwerk handeln, in welchem Daten auf der Basis des ISDN-Standards übertragen werden.

Die von der Mobilfunk-Serviceeinrichtung 2 empfangenen Sprachinformationen werden in dem in Figur 1 dargestellten Beispiel anschließend über eine ISDN-Leitung 10 an eine CTI-Servereinrichtung 11 übermittelt. Die CTI-Servereinrichtung 11 steht mit einer Sprachservereinrichtung 12 in Verbindung. Mit Hilfe der Sprachservereinrichtung 12 werden die an die CTI-Servereinrichtung 11 übermittelten Sprachinformationen, die auf der Spracheingabe des Benutzers basieren, zum Zweck einer Spracherkennung analysiert und verarbeitet. Das Ergebnis der Spracherkennung wird dann von der Sprachservereinrichtung 12 an die CTI-Servereinrichtung 11 übertragen. In Abhängigkeit vom Ergebnis der Spracherkennung initiiert die CTI-Servereinrichtung eine Folge von Anforderungen bzw. Befehlen oder führt diese teilweise selbst aus. Die Folge von Anforderungen bzw. Befehlen umfaßt hierbei einen Datenaustausch 13 zwischen der CTI-Servereinrichtung 11 und einer Dienste-Servereinrichtung 14. Die Dienste-Servereinrichtung 14 ermöglicht und unterstützt hierbei den Austausch von Daten mit dem gwünschten Dienst, der am Beginn der beschriebenen Nutzung des mobilen Endgeräts 1 durch den Benutzer mit Hilfe des Wählprogramms 9 angewählt wurde.

Infolge des Ausführens der Befehle bzw. Anforderungen mit Hilfe der CTI-Servereinrichtung 11 werden Daten erzeugt, die eine Antwort bzw. eine Reaktion auf die über den geöffneten Sprachkanal von dem Mobilfunk-Endgerät 1 an die Mobilfunk-Serviceeinrichtung 2 übermittelte Spracheingabe des Benutzer darstellen. Die erzeugten Daten werden dann an die Mobilfünk-Serviceeinrichtung 2 übertragen. Anschließend werden die Daten über einen Datenkanal des Mobilfunk-Netzwerks 3, welcher zu diesem Zweck geöffnet bzw. aufgebaut wird, von der Mobilfunk-Serviceeinrichtung 2 an das Mobilfunk-Endgerät 1 übertragen und mit Hilfe des Betriebssystems der Prozessorkarte 8 in dem Mobilfunk-Endgerät 1 so verarbeitet, daß die Daten auf dem Anzeigemittel 5 des Mobilfunk-Endgeräts 1 ausgegeben werden während der zur Übertragung der Spracheingabe des Benutzers zwischen dem Mobilfunk-Endgerät und der Mobilfunk-Serviceeinrichtung 2 ausgebildete Sprachkanal geöffnet ist. Auf diese Weise ist es ermöglicht, daß die Reaktion bzw. Antwort auf die Spracheingabe des Benutzers des Mobilfunk-Endgeräts 1 noch während der bestehenden Öffnung des zur Übertragung der Sprachinformationen genutzten Sprachkanals zur Information des Benutzers auf dem Anzeigemittel 5 dargestellt wird.

Die als Reaktion bzw. Antwort auf die Spracheingabe des Benutzers erzeugten Daten können SMS-Daten umfassen, die in einer SMS-Servereinrichtung 15 erzeugt werden, wobei die SMS-Servereinrichtung 15 als Teil der Dienste-Servereinrichtung 14 ausgebildet sein kann.

Um eine schnellstmögliche Ausgabe der als Reaktion bzw. Antwort auf die Spracheingabe des Benutzers erzeugten Daten mit Hilfe der Anzeigemittel 5 des Mobilfunk-Endgeräts 6 zu ermöglichen, werden die von der SMS-Servereinrichtung 15 erzeugten SMS-Daten mit einer hohen Priorität an eine zentrale SMS-Einrichtung 16 übermittelt, die mit der Mobilfunk-Serviceeinrichtung 2 in Verbindung steht oder als Teil der Mobilfunk-Serviceeinrichtung 2 ausgebildet ist und auch als SMS-Center bezeichnet wird. Hierbei wird vorzugsweise ein SS7-Protokoll (SS7 ― "Signalling System Number 7") genutzt. Die zentrale SMS-Einrichtung 16 ermöglicht die Übertragung von SMS-Nachrichten an das mobile Endgerät 1 der Priorität der jeweiligen SMS-Nachricht entsprechend. Die SMS-Daten gelangen anschließend über den geöffneten Datenkanal in dem Mobilfunk-Netzwerk 3 zu dem Mobilfunk-Endgerät 1 und werden dort mit Hilfe eines SMS-Teilprogramms 17, das als Teil des Betriebssystems ausgebildet oder mit Hilfe des Betriebssystems nutzbar ist, auf der Prozessorkarte 8 so verarbeitet, daß die verarbeiteten SMS-Daten über die Anzeigemittel 5 ausgegeben werden können, während der zur Übertragung der Spracheingabe genutzte Sprachkanal geöffnet ist.

Die SMS-Daten werden an die zentrale SMS-Einrichtung 16 beispielsweise über eine SMS-Verbindung 21 übermittelt.

Des weiteren können die als Reaktion bzw. Antwort erzeugten Daten USSD-Daten umfassen, die mit Hilfe einer vorzugsweise von der Dienste-Servereinrichtung 14 umfaßten USSD-Servereinrichtung 23 erzeugt werden. Die USSD-Daten werden nach dem Erzeugen über eine USSD-Verbindung 22 an die Mobilfunk-Serviceeinrichtung 2 übertragen, um dann über den geöffneten Datenkanal in dem Mobilfunk-Netzwerk 3 an das Mobilfunk-Endgerät 1 übermittelt zu werden. Hierbei ist der Datenkanal als ein USSD-Datenkanal ausgebildet. Die Nutzung des USSD-Datenkanals hat den Vorteil, daß die Datendichte auf diesem Kanal im allgemeinen gering ist, so daß eine schnellstmögliche Übermittlung der als Reaktion bzw. Antwort auf die Spracheingabe des Benutzers erzeugten Daten an das Mobilfunk-Endgerät 1 gewährleistet ist.

Bei der Ausführung der Befehle bzw. Anforderungen, die nach der Spracherkennung mit Hilfe der Sprachservereinrichtung 12 von der CTI-Servereinrichtung 11 ausgelöst wird, kann der im Rahmen der Anforderungen bzw. Befehle stattfindende Datenaustausch einen Austausch von Daten zwischen der Dienste-Servereinrichtung 14 und einer Datenbank 18 sowie zwischen der Dienste-Servereinrichtung 14 und externen Diensteeinrichtungen 19.1, ..., 19.n umfassen.

Die als Reaktion bzw. Antwort auf die Spracheingabe erzeugten Daten können digitale Sprachdaten umfassen, die mit Hilfe einer Spracheinrichtung 20 erzeugt und über die ISDN-Verbindung 10 an die Mobilfunk-Serviceeinrichtung 2 übermittelt werden. In diesem Fall wird die ISDN-Verbindung 10 als ein Sprachdatenkanal genutzt. Nach der anschließenden Übermittlung der digitalen Sprachdaten über den Datenkanal in dem Mobilfunk-Netzwerk 3 von der Mobilfunk-Serviceeinrichtung 2 an das mobile Endgerät 1 und einer möglichen Verarbeitung auf der Prozessorkarte 8 werden die Sprachdaten mit Hilfe der akustischen Ausgabemittel 7 als Sprachsignale ausgegeben.

Zu den Diensten, die mit Hilfe des beschriebenen Verfahrens ausführbar sind, gehören beispielsweise Finanz- bzw. Bankdienstleistungen. So kann mit Hilfe des Verfahrens ein Kaufauftrag für Wertpapiere ausgeführt werden. Zur Ausführung dieses Auftrags wird zunächst mit Hilfe des Wählprogramms 9 eine Verbindung mit dem gewünschten Diensteanbieter, beispielsweise einer Direktbank aufgebaut. Mit Hilfe der Spracheingabe kann der Benutzer des Mobilfunk-Endgeräts 1 dann den Dienst "Kaufauftrag" auswählen und nähere Angaben hinsichtlich seines Kaufauftrags eingeben. Die Daten, die als Reaktion auf die Spracheingabe des Benutzers erzeugt und nach Übermittlung über den Datenkanal in dem Mobilfunk-Netzwerk 3 an das Mobilfunk-Endgerät 1 auf den Anzeigemitteln 5 angezeigt werden, umfassen in diesem Fall beispielsweise den Wertpapiernamen der Wertpapiere, die der Benutzer des Mobilfunk-Endgeräts 1 kaufen möchte. Wird der Wertpapiername mit Hilfe der Anzeigemittel 5 angezeigt während der zur Übermittlung der Spracheingabe genutzte Sprachkanal noch geöffnet ist, so kann der Benutzer des Mobilfunk-Endgeräts 1 den Wertpapiernamen bestätigen oder gegebenenfalls eine Korrektur vornehmen. Sollte eine Korrektur notwendig sein, kann diese vom Benutzer mit Hilfe einer Eingabe über die Tastatur 4 oder mittels einer weiteren Spracheingabe erfolgen. Im Fall der weiteren Spracheingabe wird diese wiederum über den geöffneten Sprachkanal an die Mobilfunk-Serviceeinrichtung 2 übertragen, eine Spracherkennung ausgeführt und Antwort- bzw. Reaktionsdaten erzeugt, die dann über den geöffneten Datenkanal an das mobile Endgerät 1 übertragen werden und mit Hilfe der Anzeigemittel 5 ausgegeben werden, so daß der korrigierte Wertpapiername für den Benutzer auf den Anzeigemitteln dargestellt wird. Hierdurch ist die Bedienerfreundlichkeit des Mobilfunk-Endgeräts 1 wesentlich verbessert. Mit Hilfe der gleichzeitigen Nutzung des Sprachkanals und des Datenkanals in dem Mobilfunk-Netzwerk 3 kann ein tatsächlicher Dialog unter Einbeziehung einer Sprachsteuerung und der Anzeigemittel 5 zwischen dem Benutzer des Mobilfünk-Endgeräts 1 und der Dienste-Servereinrichtung 14 und/oder der Datenbank und/oder den externen Diensteeinrichtungen 19.1, ..., 19.n ausgeführt werden. Die Vorteile einer solchen Kommunikation sind für den Benutzer jedoch nicht auf die Ausführung von Bankdienstleistungen beschränkt. Auch bei der Abwicklung von anderen Transaktionen mit Hilfe des mobilen Endgeräts 1, wie elektronischer Handel von Waren, Buchungen im Freizeit-, Kultur- und Reisegewerbe oder Dienstleistungen in Verbindung mit Call-Centern verbessert das vorgeschlagene Verfahren die Bedienerfreundlichkeit des mobilen Endgeräts 1 und erweitert dessen Anwendungsmöglichkeiten.

Die in der vorstehenden Beschreibung, der Zeichnung, und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Austauschen von Sprachinformationen und Daten zwischen einem mobilen Endgerät (1) und einer Mobilfunk-Serviceeinrichtung (2), wobei die Sprachinformationen mit Hilfe einer Spracheingabeinrichtung (6) des mobilen Endgeräts (1) erfaßt werden, wobei die Sprachinformationen über einen Sprachkanal eines Mobilfunknetzes (3) von dem mobilen Endgerät (1) an die Mobilfunk-Serviceeinrichtung (2) und die Daten über einen Datenkanal des Mobilfunknetzes (3) von der Mobilfunk-Serviceeinrichtung (2) an das mobile Endgerät (1) übertragen werden, und wobei die Daten in Abhängigkeit von einer Analyse der Sprachinformationen erzeugt werden, **dadurch gekennzeichnet, daß** die Daten mit Hilfe von Anzeigemitteln (5) des mobilen Endgeräts (1) zumindest teilweise ausgegeben werden, während der zum Übertragen der Sprachinformationen genutzte Sprachkanal ausgebildet ist.

2. Verfahren nach Anspruch 1, **dadurch gekennzeichnet, daß** die Daten nach dem Übermitteln an das mobile Endgerät (1) mit Hilfe von Verarbeitungsmitteln (8) und eines von den Verarbeitungmitteln (8) umfaßten Betriebssystems verarbeitet werden, so daß die Daten zumindest teilweise mittels der Anzeigemittel (5) des mobilen Endgeräts (1) ausgegeben werden können.

3. Verfahren nach einem der vorhergehenden Ansprüche, **dadurch gekennzeichnet, daß** während des zumindest teilweisen Ausgebens der Daten mittels der Anzeigemittel (5) des mobilen Endgeräts (1) weitere Sprachinformationen über den Sprachkanal übertragen werden.

4. Verfahren nach einem der vorhergehenden Ansprüche, **dadurch gekennzeichnet, daß** die Daten zumindest teilweise als SMS-Daten (SMS - "Short Message Service") übertragen werden.

5. Verfahren nach Anspruch 4, **dadurch gekennzeichnet, daß** die SMS-Daten mit hoher Priorität auf der Basis eines SS7-Protkolls (SS7 - "Signalling System Number 7") übertragen werden.

6. Verfahren nach Anspruch 4 oder 5, **dadurch gekennzeichnet, daß** das Übertragen der SMS-Daten mit Hilfe einer SMS-Serviceeinrichtung (16) ausgeführt wird, die von der Mobilfunk-Serviceeinrichtung (2) umfaßt ist.

7. Verfahren nach einem der vorhergehenden Ansprüche, **dadurch gekennzeichnet, daß** die Daten zumindest teilweise als USSD-Daten (USSD - "Unstructered Supplementary Service Data ") übertragen werden

8. Verfahren nach einem der vorhergehenden Ansprüche, **dadurch gekennzeichnet, daß** die Daten Sprachdaten umfassen, die mit Hilfe akustischer Ausgabemittel (7) des mobilen Endgeräts (1) als Sprachsignale ausgegeben werden.

9. Verfahren nach einem der vorhergehenden Ansprüche, **gekennzeichnet durch** die folgenden Verfahrensschritte:
- Übertragen der Sprachinformationen von der Mobilfunk-Serviceeinrichtung (2) an Sprachverarbeitungsmittel, wobei die Sprachverarbeitungsmittel eine Servereinrichtung (11) und Spracherkennungsmittel (12) umfassen,
- Verarbeiten der Sprachinformationen mit Hilfe der Spracherkennungsmittel (12), und
- Auslösen einer Befehlsfolge mit Hilfe der Servereinrichtung (11) zum Erzeugen der Daten, wobei die Befehlsfolge von einem Ergebnis des Verarbeitens der Sprachinformationen mit Hilfe der Spracherkennungsmittel (12) abhängt.

10. Verfahren nach Anspruch 9, **dadurch gekennzeichnet, daß** die Sprachinformationen von der Mobilfunk-Serviceeinrichtung (2) an die Sprachverarbeitungsmittel zumindest teilweise mit Hilfe einer ISDN-Verbindung (10) übetragen werden.

11. Verfahren nach Anspruch 9 oder 10, **dadurch gekennzeichnet, daß** die Befehlsfolge einen Informationsaustausch zwischen der Servereinrichtung (11) und einer Dienste-Servereinrichtung (14) und/oder zwischen der Dienste-Servereinrichtung (14) und externen Dienste-Einrichtungen (19.1,..., 19.n) umfaßt.

12. Verfahren nach Anspruch 11, **dadurch gekennzeichnet, daß** die Daten zumindest teilweise in der Dienste-Servereinrichtung (14) und/oder den externen Dienste-Servereinrichtungen (19.1,..., 19.n) erzeugt werden.

13. Verfahren nach einem der Ansprüche 4 bis 6 und Anspruch 12, **dadurch gekennzeichnet, daß** die SMS-Daten mit Hilfe einer SMS-Servereinrichtung (15) erzeugt werden, die von der Dienste-Servereinrichtung (14) umfaßt ist.

14. Verfahren nach Anspruch 7 und 12, **dadurch gekennzeichnet, daß** die USSD-Daten mit Hilfe einer USSD-Servereinrichtung (23) erzeugt werden, die von der Dienste-Servereinrichtung (14) umfaßt ist.

15. Verfahren nach einem der vorhergehenden Ansprüche, **dadurch gekennzeichnet, daß** die Daten mit Hilfe der Anzeigemittel (5) des mobilen Endgeräts (1) derart ausgegeben werden, daß eine mit Hilfe der Spracheingabe initiierte Menüsteuerfunktion hinsichtlich eines Menüs ausgeführt wird, welches mittels der Anzeigemittel (5) angezeigt wird.

16. Verfahren nach einem der vorhergehenden Ansprüche, **dadurch gekennzeichnet, daß** mit Hilfe des Austauschs der Sprachinformationen und der Daten eine Bankdienstleistung abgerufen wird.

17. Mobiles Endgerät (1) zum Ausführen des Verfahrens nach einem der Ansprüche 1 bis 16, mit dem. Sprachinformationen über einen Sprachkanal eines Mobilfunknetzes (3) an eine Mobilfunk-Serviceeinrichtung (2) übertragen und Daten über einen Datenkanal des Mobilfunknetzes (3) von der Mobilfünk-Serviceeinrichtung (2) empfangen werden können, wobei die Daten in Abhängigkeit von einer Analyse der Sprachinformationen erzeugbar sind, **gekennzeichnet durch** Verarbeitungsmittel (8) mit einem Betriebssystem, wobei das Betriebssystem so ausgebildet ist, daß die Daten mit Hilfe von Anzeigemitteln (5) des mobilen Endgeräts (1) zumindest teilweise ausgegeben werden können, während der zum Übertragen der Sprachinformationen nutzbare Sprachkanal ausgebildet ist.

18. Mobiles Endgerät (1) nach Anspruch 17, **dadurch gekennzeichnet, daß** die Verarbeitungsmittel (8) auf einer SIM-Karte (SIM - "Subscriber Identity Module") ausgebildet sind, wobei auf der SIM-Karte Porzessormittel ausgebildet sind.
